# EUROPEAN PATENT APPLICATION

(11) **EP 2 696 138 A2**
(43) Date of publication of application: **12.02.2014**
(21) Application number: 13179380.4
(22) Date of filing: 06.08.2013
(51) Int. Cl.: F22B 37/10

(54) **Preventive maintenance repairing method for welded parts of boiler membrane panels and boiler equipment on which preventive maintenance repairing has been performed**

(30) Priority: 10.08.2012 JP 2012177968
(71) Applicant: Hitachi Ltd., Tokyo 100-8280 (JP)
(72) Inventor: Yanagida, Nobuyoshi, Tokyo 100-8280 (JP)
(74) Representative: MERH-IP Matias Erny Reichl Hoffmann

(57) **Abstract**

A preventive maintenance repairing method for boiler membrane panel welded parts of the present invention includes, when through cracks are produced in tubes 1 of boiler membrane panels 20, forming repaired part grooves 7 by scraping away the through cracks produced in the tubes 1, forming repaired part buildup-welded parts 8 by performing buildup welding on the repaired part grooves 7, and performing buildup welding to respectively form outer-surface buildup-welded parts 10 entirely on both sides of front surfaces and rear surfaces of the boiler membrane panels 20 including the welded parts.

## Description

### {Background of the Invention}

### {Field of the Invention}

The present invention relates to a preventive maintenance repairing method for a structure including welded parts of membrane panels forming a water wall of a boiler furnace and a boiler equipment on which preventive maintenance repairing has been performed.

### {Description of Related Art}

A boiler membrane panel for forming a water wall of a boiler furnace constituting boiler equipment includes a plurality of tubes as heat-transfer tubes in which boiler water or steam flows, and membrane bars having predetermined shapes that join these tubes at predetermined intervals by welding. A plurality of the membrane panels having the predetermined shapes are butt-welded to each other at both ends of the tubes, and thereby, form the water wall of the boiler furnace.

When the plurality of boiler membrane panels forming the water wall of the boiler furnace are joined, parts of the ends of the respective membrane bars are cut off to form clearances as welding operation spaces for butt welding of the ends of the tubes and the ends of the tubes are butt-welded, then, auxiliary membrane bars are inserted into the clearances to fill the clearances, the ends of the auxiliary membrane bars, the membrane bars and the tubes are welded for joining the membrane panels, and thereby, the water wall of the boiler furnace is formed.

A method of fabricating the boiler membrane panels forming the water wall of the boiler furnace is known, and, for example, JP-A-2007-64608 has disclosed a technology related to the method of fabricating the boiler membrane panels.

The above described joining of the membrane panels forming the water wall of the boiler furnace is typically performed on the site where boiler equipment is installed.

However, in welded parts in which the boiler membrane panels forming the water wall of the boiler furnace are joined, welding residual stress due to welding is generated.

After the welding for joining the boiler membrane panels, generally, postweld heat treatment is performed on the welded parts and the welding residual stress generated in the welded parts is reduced.

On the other hand, the postweld heat treatment may not be performed if the dimensions, shapes, and materials of the welded parts fulfill specific conditions. In this case, tensile stress generated due to welding remains in the welded parts and the heat-affected zones of the welded parts.

Further, in the boiler equipment during in-service operation, the inner side of the water wall of the boiler furnace is exposed to combustion gas generated in burning of fuels, and corrosion may occur.

As measures for the corrosion, a method of buildup welding in a uniform thickness to cover the entire surface of the boiler membrane panels using a nickel base alloy corrosion-resistant material as a buildup weld metal is applied.

However, when buildup welding of the corrosion-resistant material of nickel base alloy is performed only on the inner sides of the boiler membrane panels to be the inner side of the water wall of the boiler furnace, welding deformation occurs in the buildup-welded parts of the boiler membrane panels in which the corrosion-resistant material of nickel base alloy is buildup-welded due to contraction of the weld metal after buildup welding.

Accordingly, in order to avoid occurrence of welding deformation of the buildup-welded parts due to buildup welding of the corrosion-resistant material of nickel base alloy on the inner sides of the boiler membrane panels forming the water wall of the boiler furnace, JP-A-Hei10(1998)-238706 has proposed a method of reducing the welding area for buildup welding by performing fillet welding of joining tubes and membrane bars in locations in which the membrane bars forming the boiler membrane panels are shifted toward the boiler inner side as the top side of the tube from the center part of the section of the tubes, and thereby, shortening the welding time and reducing the amount of weld metal necessary for buildup welding.

Further, JP-A-2007-155233 has proposed a method of suppressing welding deformation by performing fillet welding of joining tubes and membrane bars forming the boiler membrane panels and performing buildup welding of the corrosion-resistant material on the entire surface at the inner sides of the boiler membrane panel to be the inner side of the water wall surface of the boiler furnace.

### {Patent Literature 1}

Japanese Patent Laid-open No. 2007-64609

### {Patent Literature 2}

Japanese Patent Laid-open No. Hei 10(1998)-238706

### {Patent Literature 3}

Japanese Patent Laid-open No. 2007-155233

### {Summary of Invention}

As described in the {Background of the Invention}, in the welded parts of the boiler membrane panels forming the water wall of the boiler furnace, the postweld heat treatment may not be performed on the welded parts of the boiler membrane panels if the dimensions, shapes, and materials of the welded parts fulfill specified conditions.

Further, if the postweld heat treatment is not performed on the welded parts of the boiler membrane panels, tensile stress due to welding remains in the welded parts of the boiler membrane panels and the heat-affected zones of the welded parts.

The tensile stress remaining in the welded parts and the heat-affected zones of the welded parts is a factor for stress corrosion cracking. In order to suppress occurrence of the stress corrosion cracking in the welded parts and the heat-affected zones of the welded parts, it is preferable to reduce the tensile residual stress. It is more preferable to apply compressive residual stress to the welded parts and the heat-affected zones of the welded parts.

In welding of the boiler membrane panels forming the water wall of the boiler furnace, girth welding of joining tubes forming the membrane panels and welding of joining auxiliary membranes and the tubes forming the membrane panels are performed.

In boiler equipment, after a plurality of the boiler membrane panels forming the water wall of the boiler furnace are welded to form welded parts, a heater or heat insulating material is provided for the welded parts in which the boiler membrane panels have been welded and postweld heat treatment of the welded parts is performed, and thereby, a lot of man-hours are required for the postweld heat treatment of the welded parts.

Further, in the postweld heat treatment of the welded parts in which the boiler membrane panels have been welded, the welding residual stress remaining in the welded parts due to generation of creep strain is relaxed and the absolute value of the residual stress asymptotically approaches to zero, however, the compressive stress in the welded parts is not generated.

In the tube welded parts of the boiler membrane panels forming the water wall of the boiler furnace of the existing boiler equipment, if stress corrosion cracking occurs in the welded parts and the inner fluid leaks from the tubes, repairing for removing cracks produced in the tubes from which the inner fluid has leaked and buildup welding in grooves formed by removing the cracks is performed.

Generally, when repairing of buildup welding in grooves formed by removing the cracks produced in the tubes is performed, tensile residual stress is generated in the buildup-welded parts after repairing. Accordingly, stress corrosion cracking may occur again from the buildup-welded parts in which the cracks produced in the tubes has been repaired.

In the tube welded parts of the boiler membrane panels forming the water wall of the boiler furnace, in order to improve reliability of the repaired parts in which the cracks produced in the tubes have been buildup-welded, it is preferable to reduce the tensile residual stress generated in the buildup-welded parts after repairing. It is more preferable to apply compressive residual stress to the buildup-welded parts after repairing.

However, in the above described method of postweld heat treatment of the welded parts in which the boiler membrane panels are welded, in order to suppress occurrence of the stress corrosion cracking in the tube welded parts of the boiler membrane panels, it has been necessary to find out a preventive maintenance repairing method of welded parts that may apply compressive residual stress to inner surfaces of the welded parts in the girth-welded parts of the tubes in which the boiler membrane panels are joined.

An object of the present invention is to provide a preventive maintenance repairing method for boiler membrane panel welded parts by which compressive residual stress is applied to inner surfaces of girth-welded parts of tubes of boiler membrane panels forming a water wall of a boiler furnace, occurrence of bending deformation in the boiler membrane panels is suppressed, and strength is secured, and boiler equipment on which preventive maintenance repairing has been performed.

A preventive maintenance repairing method for boiler membrane panel welded parts of the present invention in which tubes of boiler membrane panels are welded, a plurality of the boiler membrane panels forming a water wall of a boiler furnace, the boiler membrane panel including a plurality of the tubes as heat-transfer tubes forming the water wall of the boiler furnace and a plurality of membrane bars joining the tubes, comprising the steps of: when through cracks are produced in the tubes of the boiler membrane panels, forming repaired part grooves by scraping away the through cracks produced in the tubes; forming repaired part buildup-welded parts by performing buildup welding on the repaired part grooves formed in the tubes; and performing buildup welding to respectively form outer-surface buildup-welded parts entirely on both sides of front surfaces and rear surfaces of the boiler membrane panels including the welded parts of the tubes.

Further, a preventive maintenance repairing method for boiler membrane panel welded parts of the present invention in which tubes of boiler membrane panels are welded, a plurality of the boiler membrane panels forming a water wall of a boiler furnace, the boiler membrane panel including a plurality of the tubes as heat-transfer tubes forming the water wall of the boiler furnace and a plurality of membrane bars joining the tubes, comprising the steps of: when non-through cracks are produced in the tubes of the boiler membrane panels, performing buildup welding to respectively form outer-surface buildup-welded parts entirely on both sides of front surfaces and rear surfaces of the boiler membrane panels including the welded parts of the tubes with the non-through cracks produced in the tubes left.

According to the invention, the preventive maintenance repairing method for boiler membrane panel welded parts by which compressive residual stress is applied to inner surfaces of girth-welded parts of the tubes of the boiler membrane panels forming the water wall of the boiler furnace and occurrence of bending deformation is suppressed in the boiler membrane panels, and the strength may be secured, and the boiler equipment on which the preventive maintenance repairing has been performed may be realized.

### {Brief Description of the Drawings}

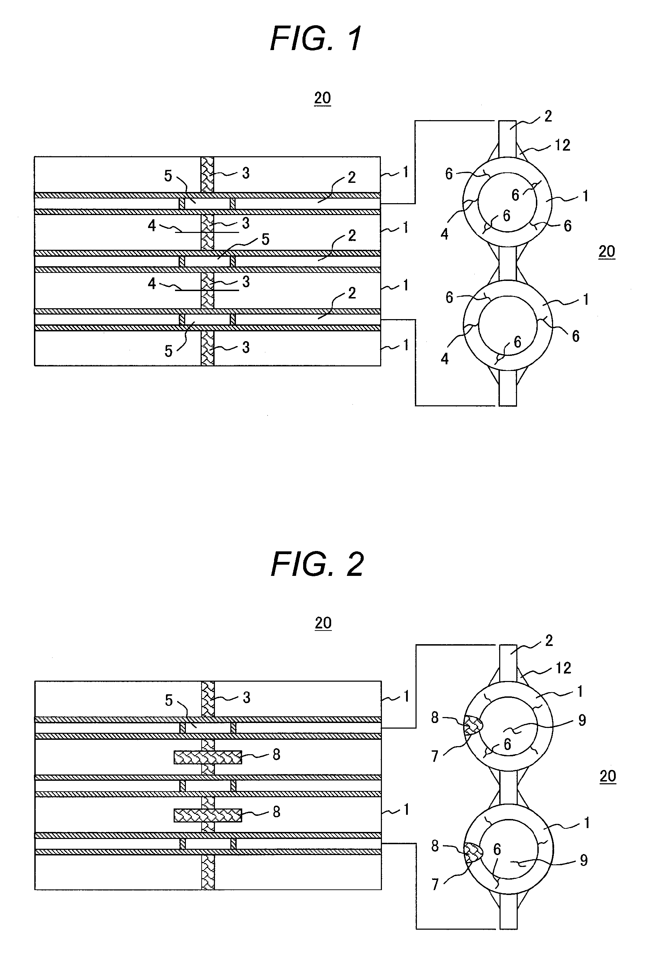

{Fig. 1} Fig. 1 is a partial sectional view showing membrane panels to which a heat treatment method for boiler membrane panel welded parts as the first embodiment of the present invention is applied, and tubes forming the membrane panels and including welded parts in circumferential directions in which ends of the tubes are butt-welded.

{Fig. 2} Fig. 2 is a partial sectional view of the membrane panels and the tubes showing a condition in which repaired part grooves formed in the tubes as part of performance of the heat treatment method for boiler membrane panel welded parts as the first embodiment of the present invention, and repaired part buildup welding are provided.

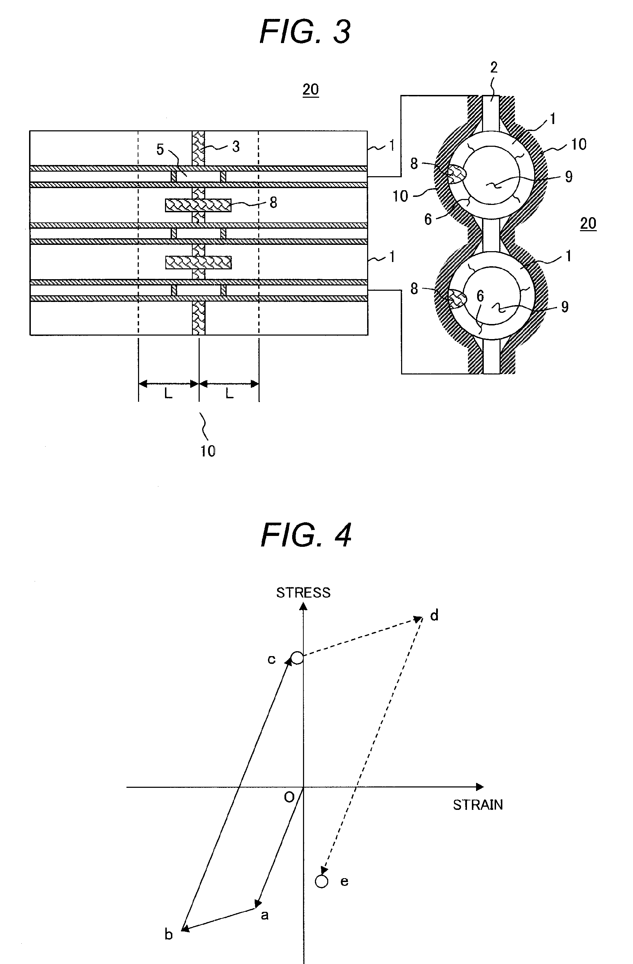

{Fig. 3} Fig. 3 is a partial sectional view of the membrane panels and the tubes showing a condition in which outer-surface buildup welding is performed on both sides of front surfaces and rear surfaces of the membrane panels including the welded parts of the tubes as part of the performance of the heat treatment method for boiler membrane panel welded parts as the first embodiment of the present invention.

{Fig. 4} Fig. 4 is an explanatory diagram showing a stress strain history in a welding process according to the heat treatment method for boiler membrane panel welded parts as the first embodiment of the present invention.

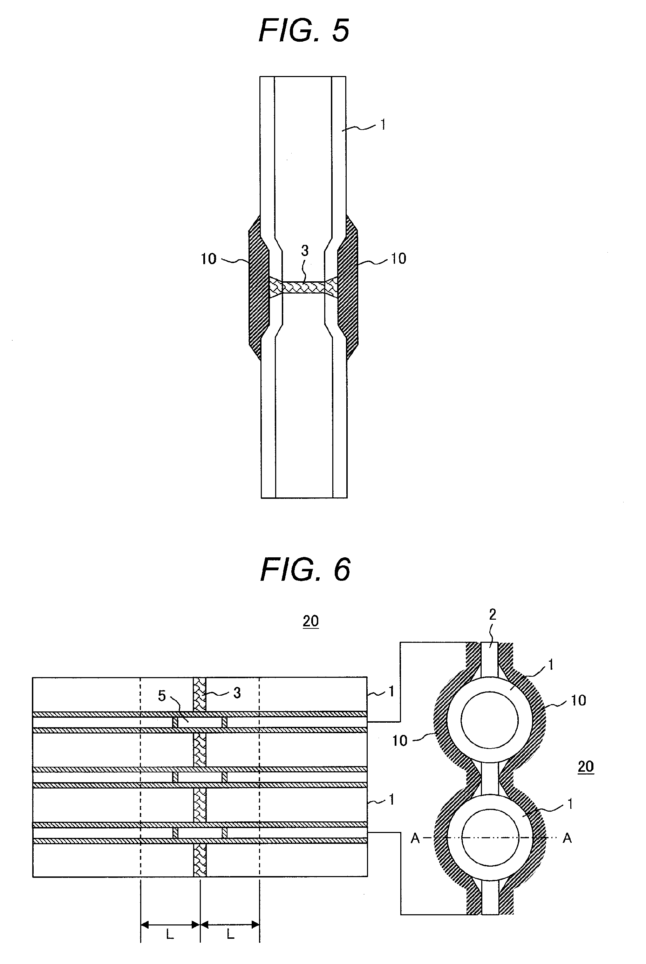

{Fig. 5} Fig. 5 is an explanatory diagram schematically showing contraction deformation due to outer-surface buildup welding of the heat treatment method for boiler membrane panel welded parts as the first embodiment of the present invention.

{Fig. 6} Fig. 6 is a partial sectional view of the membrane panels and the tubes showing a condition in which outer-surface buildup welding is performed on both sides of front surfaces and rear surfaces of the membrane panels including the welded parts of the tubes as part of performance of a heat treatment method for boiler membrane panel welded parts as the second embodiment of the present invention.

### {Detailed Description of the Invention}

A preventive maintenance repairing method for boiler membrane panel welded parts as embodiments of the present invention will be explained using the drawings.

### [Embodiment 1]

A preventive maintenance repairing method for boiler membrane panel welded parts as the first embodiment of the present invention will be explained using Figs. 1 to 5.

In explanation of the preventive maintenance repairing method for boiler membrane panel welded parts as the present embodiment, as shown in Fig. 1, boiler membrane panels 20 forming a water wall of a boiler furnace of boiler equipment to which the preventive maintenance repairing method for boiler membrane panel welded parts as the present embodiment is manufactured using low-alloy steel.

Further, in the boiler membrane panel 20, a plurality of tubes 1 as heat-transfer tubes in which boiler water or steam flows and a plurality of membrane bars 2 joining these tubes 1 at predetermined intervals are welded in fillet-welded parts 12 to be alternately arranged in the axis direction of the tubes 1, and the same low-alloy steel as that for the boiler membrane panels 20 is also used as the material of the tubes 1 and the membrane bars 2 and the weld metal of the fillet-welded parts 12.

As shown in Fig. 2, the boiler membrane panels 20 are joined by tube welded parts 3 in the circumference directions of the tubes 1 in which the adjacent tubes 1 are butt-welded and auxiliary membranes 5 to form the water wall of the boiler furnace.

The same low-alloy steel as that for the boiler membrane panels 20 is also used as the weld metal of the tube welded parts 3 for welding in the circumference directions of the tubes 1 and the material of the auxiliary membranes 5.

In the preventive maintenance repairing method for boiler membrane panel welded parts of the present embodiment, the preventive maintenance repairing method for boiler membrane panel welded parts under a condition that through cracks 4 penetrating from the inner surfaces to the outer surfaces of the tubes 1 are produced in the tubes 1 forming the as the boiler membrane panels 20 after operation in a fixed period and non-through cracks 6 produced on the inner surfaces but not penetrating to the outer surfaces of the tubes 1 are detected will be explained.

In the preventive maintenance repairing method for boiler membrane panel welded parts of the present embodiment, as the preventive maintenance repairing method for boiler membrane panel welded parts performed when the through cracks 4 penetrating from the inner surfaces to the outer surfaces of the tubes 1 are produced in the tubes 1 forming the boiler membrane panels 20 and the non-through cracks 6 produced on the inner surfaces, but not penetrating to the outer surfaces of the tubes 1 are detected, first, as shown in Fig. 2, the through cracks 4 are produced in the tubes 1 forming the boiler membrane panels 20, the parts of the tubes 1 that the through cracks 4 penetrate are partially scraped away by a grinder as cutting means, and repaired part grooves 7 are formed in the tubes 1.

Then, welding is performed on the repaired part grooves 7 formed in the tubes 1 to form repaired part buildup-welded parts 8 in the parts of the tubes 1 in which the through cracks 4 have been produced using a weld metal of low-alloy steel as shown in Fig. 2.

The same type of low-alloy steel as the material of the boiler membrane panels 20 is used as the respective materials of the tubes 1, the membrane bars 2, and the auxiliary membranes 5 constituting the boiler membrane panels 20 forming the water wall of the boiler furnace and the weld metals of the fillet-welded parts 12 and the repaired part buildup-welded parts 8.

In the buildup welding of the repaired part buildup-welded parts 8 for repairing the repaired part grooves 7 formed in the tubes 1, cooling of interiors 9 of the tubes 1 is not performed. The repaired part grooves 7 are formed in the tubes 1 by cutting using the grinder, and thereby, the through cracks 4 penetrating from the inner surfaces to the outer surfaces of the tubes 1 are removed.

Further, the repaired part buildup-welded parts 8 are provided by buildup welding in the repaired part grooves 7 formed by local cutting in the tubes 1 as described above, and thereby, tensile residual stress is generated in the repaired part buildup-welded parts 8 provided in the tubes 1.

Then, as the preventive maintenance repairing method for boiler membrane panel welded parts performed on the non-through cracks 6 produced on the inner surfaces of the tubes 1, but not penetrating to the outer surfaces of the tubes 1 in the tubes 1 as the welded parts of the boiler membrane panels 20, outer-surface buildup-welded parts 10 are respectively formed on both sides of the front surfaces and the rear surfaces of the boiler membrane panels 20 including the tubes 1 and the membrane bars 2 joined to the tubes 1 by performing buildup welding in a uniform thickness over the entire surface of the boiler membrane panels 20 using the weld metal of the same low-alloy steel as that for the boiler membrane panels 20.

As shown in Fig. 3, the buildup welding for forming the outer-surface buildup-welded parts 10 on both sides of the front surfaces and the rear surfaces of the boiler membrane panels 20 is respectively performed using the weld metal of the low-alloy steel around the tube welded parts 3 in the circumference directions of the tubes 1 formed by butt welding of one tubes 1 and the other tubes 1 to be joined to each other over ranges L of a range at one side shown by one L in the drawing from the tube welded parts 3 toward the one tubes 1 and a range at the other side shown by the other L in the drawing from the tube welded parts 3 toward the other tubes 1.

Here, regarding the range L in which the outer-surface buildup-welded parts 10 are provided, the range L in which the outer-surface buildup-welded parts 10 are buildup-welded is set to a range from 2.5 times to ten times (Rt)^{1/2}, given that the average radius of the tubes 1 is R and the thickness is t.

The reason that the range L in which the outer-surface buildup-welded parts 10 are buildup-welded is set to equal to or more than 2.5 times (Rt)^{1/2} around the tube welded parts 3 is that the region where residual stress is generated in the welded parts is about 2.5 times (Rt)^{1/2} and the region where residual stress is generated may be covered by the outer-surface buildup-welded parts 10.

The reason that the range L in which the outer-surface buildup-welded parts 10 are buildup-welded is set to equal to or less than ten times (Rt)^{1/2} around the tube welded parts 3 is that the range is set as the upper limit for suppressing the increase in the number of man-hours of welding for buildup welding of the outer-surface buildup-welded parts 10.

Further, the thickness of the outer-surface buildup-welded parts 10 is formed to be from the thickness t of the tubes 1 to twice the thickness.

The reason that the thickness of the outer-surface buildup-welded parts 10 is set to equal to or more than the thickness t of the tubes 1 is such that the strength of the boiler membrane panels 20 for buildup welding of the outer-surface buildup-welded parts 10 may be secured, and the reason that the thickness of the outer-surface buildup-welded parts 10 is set to equal to or less than twice the thickness t of the tubes 1 is such that the increase in the number of man-hours for buildup welding of the outer-surface buildup-welded parts 10 may be suppressed.

As the weld metal of the outer-surface buildup-welded parts 10, low-alloy steel as the same type of low-alloy steel as the material of the boiler membrane panels 20 is used like the respective materials of the tubes 1, the membrane bars 2, and the auxiliary membranes 5 forming the boiler membrane panels 20 and the weld metals of the fillet-welded parts 12 and the repaired part buildup-welded parts 8.

Further, not only the low-alloy steel but also carbon steel may be applied to the weld metal of the outer-surface buildup-welded parts 10. In the case where the carbon steel is used for the weld metal of the outer-surface buildup-welded parts 10, the same type of carbon steel is also used for the respective materials of the boiler membrane panels 20, the tubes 1, the membrane bars 2, and the auxiliary membranes 5 forming the boiler membrane panels 20 and the weld metals of the fillet-welded parts 12 and the repaired part buildup-welded parts 8.

Furthermore, the buildup welding of the outer-surface buildup-welded parts 10 over the entire surface on both sides of the front surfaces and the rear surfaces of the boiler membrane panels 20 is performed while the interiors 9 of the tubes 1 forming the boiler membrane panels 20 are filled with water of a cooling medium.

When the interiors 9 of the tubes 1 are filled with water and the outer surfaces of the tubes 1 forming the boiler membrane panels 20 are buildup-welded, the inner surfaces of the tubes 1 are at a lower temperature and the outer surfaces of the tubes 1 are at a higher temperature in the welding process, and tensile stress is generated on the inner sides of the tubes 1.

When the non-through cracks 6 produced on the inner surfaces but not penetrating to the outer surfaces of the tubes 1 are left in the tubes 1, tensile stress is generated on the ends of the non-through cracks 6.

Then, when tensile plastic strain is generated on the crack ends of the non-through cracks 6 due to the tensile stress and the entire welded parts are at a uniform temperature after the buildup welding of the tubes 1, the residual stress on the crack ends of the non-through cracks 6 becomes compressive stress and causes suppression of the development of the cracks.

A history of stress generated in the outer-surface buildup-welded parts 10 when buildup welding of the outer-surface buildup-welded parts 10 is performed over the entire surface of the tube welded parts 3 in the circumference directions in which the tubes 1 forming the boiler membrane panels 20 are welded and both the front surfaces and the rear surfaces of the boiler membrane panels 20 including the tubes 1 and the membrane bars 2 joined to the tubes 1 will be explained using Fig. 4.

Fig. 4 shows the history of the stress generated in the outer-surface buildup-welded parts 10 provided on the boiler membrane panels 20. As shown in Fig. 4, in the tube welded parts 3 in the circumference directions forming the boiler membrane panels 20, volume expansion is restricted by the surrounding region because of local temperature rise due to local heat input of welding in the welding heat input process, and thereby, compressive stress is generated.

In Fig. 4, the stress moving in paths 0 → a → b shows a stress history in the heating process in the tube welded parts 3 in the circumference directions of the tubes 1, and compressive plastic strain is generated.

The tube welded parts 3 in the circumference directions of the tubes 1 are decreased in temperature and cooled after welding, and the stress moving in a path b → c shows the stress history in the cooling process and point c in Fig. 4 corresponds to the residual stress after welding in the tube welded parts 3 in the circumference directions of the tubes 1.

When buildup welding for forming the outer-surface buildup-welded parts 10 is performed over the entire surface of both sides of the front surfaces and the rear surfaces of the boiler membrane panels 20 including the tubes 1 and the membrane bars 2 while the interiors 9 of the tubes 1 are cooled, the expansion of the outer-surface buildup-welded parts 10 is restricted by the surrounding parts because of local temperature rise with welding of buildup welding of the outer-surface buildup-welded parts 10, and thereby, tensile stress is generated on the inner surfaces of the tubes 1 and plastic strain at the tension side is generated.

The stress on the inner surfaces of the tubes 1 during buildup welding of the outer-surface buildup-welded parts 10 corresponds to point d in Fig. 4.

Then, in the process in which welding heat input with welding of buildup welding of the outer-surface buildup-welded parts 10 ends and the whole outer-surface buildup-welded parts 10 are at the uniform temperature, the stress moves from d to e in Fig. 4. In Fig. 4, point e corresponds to residual stress on the inner surfaces of the tubes 1 after buildup welding of the outer-surface buildup-welded parts 10.

As shown in Fig. 3, buildup welding of the outer-surface buildup-welded parts 10 is performed over the entire surface of both sides of the front surface and the rear surface of the boiler membrane panel 20 including the tubes 1 and the membrane bars 2, and, regarding the range of the buildup welding of the outer-surface buildup-welded parts 10, the range of the buildup welding of the outer-surface buildup-welded parts 10 is respectively performed using the weld metal of the low-alloy steel around the tube welded parts 3 in the circumference directions of the tubes 1 from the tube welded parts 3 along the axial direction of the tubes 1 over ranges L of the range at one side shown by one L in the drawing toward the one tubes 1 and the range at the other side shown by the other L in the drawing toward the other tubes 1.

Here, regarding the range L in which the outer-surface buildup-welded parts 10 are provided, the range L in which the outer-surface buildup-welded parts 10 are buildup-welded is set to a range from 2.5 times to ten times (Rt)^{1/2}, given that the average radius of the tubes 1 is R and the thickness is t.

Further, the thickness of the outer-surface buildup-welded parts 10 is formed to be from the thickness t of the tubes 1 to twice the thickness.

As the weld metal of the outer-surface buildup-welded parts 10, a weld metal of low-alloy steel is used, however, not only the low-alloy steel but also carbon steel may be applied. The buildup welding of the outer-surface buildup-welded parts 10 is performed while the interiors 9 of the tubes 1 of the boiler membrane panels 20 are filled with water of the cooling medium as described above.

The outer-surface buildup-welded parts 10 are buildup-welded over the range L over both sides of the front surfaces and the rear surfaces of the boiler membrane panels 20, and thereby, the tube welded parts 3 in the circumference directions forming the boiler membrane panels 20 and the heat-affected zones of the welded parts are subjected to contraction deformation in radial directions due to contraction of the weld metal.

In this regard, tensile stress is generated around the buildup-welded outer-surface buildup-welded parts 10. On the other hand, compressive stress is generated due to contraction deformation from the weld metal in regions of the existing weld metal parts and the welding heat-affected zones of the weld metal parts.

Fig. 5 is a partial sectional view of the tubes 1 in which the outer-surface buildup-welded parts 10 are buildup-welded at the outer circumference sides of the tubes 1 including the tube welded parts 3 in the circumference directions connecting the tubes 1 shown in Fig. 3 as the outer-surface buildup-welded parts in the heat treatment method of the boiler membrane panels 20 as the present embodiment.

As shown in Fig. 5, contraction deformation in the radial directions is generated in the tubes 1 due to contraction force of the outer-surface buildup-welded parts 10. Because of the contraction deformation, the residual stress on the inner surfaces of the tubes 1 becomes compressive stress.

Note that, when the interiors 9 of the tubes 1 are not filled with water of the cooling medium, the tensile residual stress generated on the inner sides of the tubes 1 may be reduced by the contraction deformation in the circumferential directions and the axial directions of the weld metal of the outer-surface buildup-welded parts 10.

Further, the thickness of the buildup welding of the outer-surface buildup-welded parts 10 is formed to be from the thickness t of the tubes 1 to twice the thickness, thereby, if the non-through cracks 6 are left on the inner surfaces of the tubes 1, the welded parts having the thickness nearly equal to or more than the thickness of the tubes 1 may be secured by the buildup welding of the outer-surface buildup-welded parts 10, and thus, the strength of the structure of the boiler membrane panels may be secured.

The boiler membrane panels 20 forming the water wall of the boiler furnace are deformed so that the inner side of the water wall on which buildup welding has been performed may be concaved if the buildup welding is performed only on the inner sides.

Accordingly, in the preventive maintenance repairing method for boiler membrane panel welded parts of the present embodiment, the outer-surface buildup-welded parts 10 are respectively formed by buildup welding over the entire surface on both the front surfaces and the rear surfaces of the boiler membrane panels 20 including the front surfaces and the rear surfaces of the tubes 1 forming the boiler membrane panels 20 and the membrane bars 2 joined to the tubes 1, and thereby, occurrence of bending deformation in the boiler membrane panels 20 forming the water wall on which the outer-surface buildup-welded parts 10 is suppressed.

Further, when the nickel base alloy is used as the weld metal for buildup welding of the outer-surface buildup-welded parts 10 provided on the boiler membrane panels 20, and thus, that is effective as measures for corrosion due to the combustion gas to which the water wall inner sides of the boiler furnace are exposed.

As described above, the preventive maintenance repairing method for boiler membrane panel welded parts of the present embodiment is performed in the above described procedure, the removal of the through cracks produced in the tubes forming the boiler membrane panels, generation of compressive stress in the remaining non-through cracks, securement of the thickness with necessary strength by the buildup-welded parts forming the outer-surface buildup-welded parts, and measures for corrosion may be implemented.

Further, the outer-surface buildup-welded parts are buildup-welded over the entire surface on both sides of the front surfaces and the rear surfaces of the boiler membrane panels forming the water wall of the boiler furnace, and thereby, occurrence of bending deformation in the boiler membrane panels due to buildup welding may be suppressed.

As a result, the preventive maintenance repairing method for boiler membrane panel welded parts of the present embodiment is performed, and thereby, operation with high reliability of boiler equipment may be continued.

According to the present embodiment, the preventive maintenance repairing method for boiler membrane panel welded parts by which the compressive residual stress is applied to the inner surfaces of the girth-welded parts of the tubes of the boiler membrane panels forming the water wall of the boiler furnace and occurrence of bending deformation is suppressed in the boiler membrane panels, and the strength may be secured, and the boiler equipment on which the preventive maintenance repairing has been performed may be realized.

### [Embodiment 2]

A preventive maintenance repairing method for boiler membrane panel welded parts as the second embodiment of the invention will be explained using Fig. 6.

The preventive maintenance repairing method for boiler membrane panel welded parts of the present embodiment has the same basic configuration as that of the preventive maintenance repairing method for boiler membrane panel welded parts of the first embodiment shown in Figs. 1 to 5, and the explanation in common will be omitted and only the different parts will be explained as below.

As shown in Fig. 6, the preventive maintenance repairing method for boiler membrane panel welded parts of the present embodiment is different from the preventive maintenance repairing method for boiler membrane panel welded parts of the first embodiment in that the preventive maintenance repairing method for boiler membrane panel welded parts is performed under the condition that no through cracks 4 or non-through cracks 6 are produced in the tube welded parts 3 in the circumference directions of the tubes 1 forming the boiler membrane panels 20 forming the boiler water wall or the heat-affected zones by the tube welded parts 3.

Therefore, in the preventive maintenance repairing method for boiler membrane panel welded parts of the present embodiment, the step of forming the repaired part grooves 7 by cutting the through cracks 4 using the grinder in the tubes 1 and the step of providing the repaired part buildup-welded parts 8 by buildup welding in the repaired part grooves 7 are respectively unnecessary.

Also, in the preventive maintenance repairing method for boiler membrane panel welded parts of the present embodiment, the outer-surface buildup-welded parts 10 are respectively formed by performing buildup welding over the entire surface on both sides of the front surfaces and the rear surfaces of the boiler membrane panels 20 including the tubes 1 and the membrane bars 2 joined to the tubes 1.

In the buildup welding for forming the outer-surface buildup-welded parts 10 in the present embodiment, as is the case shown in Fig. 3 in the first embodiment, as shown in Fig. 6, the buildup welding of the outer-surface buildup-welded parts 10 is respectively performed using the weld metal of the low-alloy steel around the tube welded parts 3 in the circumference directions of the tubes 1 formed by butt welding of one tubes 1 and the other tubes 1 to be joined to each other over ranges L of a range at one side shown by one L in the drawing from the tube welded parts 3 toward the one tubes 1 and a range at the other side shown by the other L in the drawing from the tube welded parts 3 toward the other tubes 1.

Here, regarding the range L in which the outer-surface buildup-welded parts 10 are provided, as is the case of the first embodiment, the range L in which the outer-surface buildup-welded parts 10 are buildup-welded is set to a range from 2.5 times to ten times (Rt)^{1/2}, given that the average radius of the tubes 1 is R and the thickness is t.

The reason that the range L in which the outer-surface buildup-welded parts 10 are buildup-welded is set to equal to or more than 2.5 times (Rt)^{1/2} around the tube welded parts 3 is that the region where residual stress is generated in the welded parts is about 2.5 times (Rt)^{1/2} and the region where residual stress is generated may be covered by the outer-surface buildup-welded parts 10.

The reason that the range L in which the outer-surface buildup-welded parts 10 are buildup-welded is set to equal to or less than ten times (Rt)^{1/2} around the tube welded parts 3 is that the range is set as the upper limit for suppressing the increase in the number of man-hours of welding for buildup welding of the outer-surface buildup-welded parts 10.

Further, the thickness of the outer-surface buildup-welded parts 10 is formed to be from the thickness t of the tubes 1 to twice the thickness.

The reason that the thickness of the outer-surface buildup-welded parts 10 is set to equal to or more than the thickness t of the tubes 1 is such that the strength of the boiler membrane panels 20 for buildup welding of the outer-surface buildup-welded parts 10 may be secured, and the reason that the thickness of the outer-surface buildup-welded parts 10 is set to equal to or less than twice the thickness t of the tubes 1 is such that the increase in the number of man-hours of welding for buildup welding of the outer-surface buildup-welded parts 10 may be suppressed.

As the weld metal of the outer-surface buildup-welded parts 10, low-alloy steel as the same type of low-alloy steel as the material of the boiler membrane panels 20 is used like the respective materials of the tubes 1, the membrane bars 2, and the auxiliary membranes 5 forming the boiler membrane panel 20 and the weld metals of the fillet-welded parts 12 and the repaired part buildup-welded parts 8.

In the present embodiment, when the nickel base alloy is used as the weld metal for buildup welding of the outer-surface buildup-welded parts 10 provided on the boiler membrane panels 20, and thus, that is effective as measures for corrosion due to the combustion gas to which the water wall inner sides of the boiler furnace are exposed.

Further, not only the low-alloy steel but also carbon steel may be applied to the weld metal of the outer-surface buildup-welded parts 10. In the case where the carbon steel is applied to the weld metal of the outer-surface buildup-welded parts 10, the same type of carbon alloy is also used for the respective materials of the boiler membrane panels 20, and the tubes 1, the membrane bars 2, and the auxiliary membranes 5 forming the boiler membrane panels 20 and the weld metals of the fillet-welded parts 12.

Furthermore, the buildup welding of the outer-surface buildup-welded parts 10 over the entire surface on both sides of the front surfaces and the rear surfaces of the boiler membrane panels 20 is performed while the interiors 9 of the tubes 1 forming the boiler membrane panel 20 are filled with water of the cooling medium.

When the interiors 9 of the tubes 1 are filled with water and the outer surfaces of the tubes 1 forming the boiler membrane panels 20 are buildup-welded, the inner surfaces of the tubes 1 are at a lower temperature and the outer surfaces of the tubes 1 are at a higher temperature in the welding process, and tensile stress is generated on the inner surface sides of the tubes 1.

When the non-through cracks 6 produced on the inner surfaces but not penetrating to the outer surfaces of the tubes 1 are left in the tubes 1, tensile stress is generated on the ends of the non-through cracks 6.

Then, when tensile plastic strain is generated on the crack ends of the non-through cracks 6 due to the tensile stress and the entire welded parts are at the uniform temperature after the buildup welding of the tubes 1, the residual stress on the crack ends of the non-through cracks 6 becomes compressive stress and causes suppression of the development of the cracks.

The history of stress generated in the outer-surface buildup-welded parts 10 when buildup welding is performed on the outer-surface buildup-welded parts 10 over the entire surface of the tube welded parts 3 in the circumference directions in which the tubes 1 forming the boiler membrane panels 20 are welded and both the front surfaces and the rear surfaces of the boiler membrane panel 20 including the tubes 1 and the membrane bars 2 joined to the tubes 1 is the same as that has been explained using Fig. 4 in the first embodiment, and the explanation is omitted here.

As described above, the preventive maintenance repairing method for boiler membrane panel welded parts of the present embodiment is performed in the above described procedure, even if non-through cracks are left in the tubes forming the boiler membrane panels, generation of compressive stress in the cracks, securement of the thickness with necessary strength by the buildup-welded parts forming the outer-surface buildup-welded parts, and measures for corrosion may be implemented.

Further, the outer-surface buildup-welded parts are buildup-welded over the entire surface on both sides of the front surfaces and the rear surfaces of the boiler membrane panels forming the water wall of the boiler furnace, and thereby, occurrence of bending deformation in the boiler membrane panels due to buildup welding may be suppressed.

As a result, the preventive maintenance repairing method for boiler membrane panel welded parts of the present embodiment is performed, and thereby, operation with high reliability of boiler equipment may be continued.

According to the present embodiment, the preventive maintenance repairing method for boiler membrane panel welded parts by which the compressive residual stress is applied to the inner surfaces of the girth-welded parts of the tubes of the boiler membrane panels forming the water wall of the boiler furnace and occurrence of bending deformation is suppressed in the boiler membrane panels, and the strength may be secured, and the boiler equipment on which the preventive maintenance repairing has been performed may be realized.

### {Legends}

1: tubes, 2: membrane bars, 3: tube welded parts, 4: through cracks, 5: auxiliary membranes, 6: non-through cracks, 7: repaired part grooves, 8: repaired part buildup-welded parts, 9: interiors of the tubes, 10: outer-surface buildup-welded parts, 12: fillet-welded parts, 20: boiler membrane panels.

## Claims

1. A preventive maintenance repairing method for boiler membrane panel welded parts in which tubes of boiler membrane panels are welded, a plurality of the boiler membrane panels forming a water wall of a boiler furnace, the boiler membrane panel including a plurality of the tubes as heat-transfer tubes forming the water wall of the boiler furnace and a plurality of membrane bars joining the tubes, comprising the steps of:
when through cracks are produced in the tubes of the boiler membrane panels, forming repaired part grooves by scraping away the through cracks produced in the tubes;
forming repaired part buildup-welded parts by performing buildup welding on the repaired part grooves formed in the tubes; and
performing buildup welding to respectively form outer-surface buildup-welded parts entirely on both sides of front surfaces and rear surfaces of the boiler membrane panels including the welded parts of the tubes.

2. A preventive maintenance repairing method for boiler membrane panel welded parts in which tubes of boiler membrane panels are welded, a plurality of the boiler membrane panels forming a water wall of a boiler furnace, the boiler membrane panel including a plurality of the tubes as heat-transfer tubes forming the water wall of the boiler furnace and a plurality of membrane bars joining the tubes, the preventive maintenance repairing method comprising the steps of:
when non-through cracks are produced in the tubes of the boiler membrane panels, performing buildup welding to respectively form outer-surface buildup-welded parts entirely on both sides of front surfaces and rear surfaces of the boiler membrane panels including the welded parts of the tubes with the non-through cracks produced in the tubes left.

3. The preventive maintenance repairing method for boiler membrane panel welded parts according to claim 1 or 2, wherein low-alloy steel as the same type of material as those of the tubes, the membrane bars, and the boiler membrane panels is used as a weld metal of the buildup welding for forming the outer-surface buildup-welded parts.

4. The preventive maintenance repairing method for boiler membrane panel welded parts according to claim 1 or 2, wherein carbon steel as the same type of material as those of the tubes, the membrane bars, and the boiler membrane panels is used as a weld metal of the buildup welding for forming the outer-surface buildup-welded parts.

5. The preventive maintenance repairing method for boiler membrane panel welded parts according to claim 1 or 2, wherein a nickel base alloy as dissimilar type of material as those of the tubes, the membrane bars, and the boiler membrane panels is used as the weld metal of the buildup welding for forming the outer-surface buildup-welded parts.

6. The preventive maintenance repairing method for boiler membrane panel welded parts according to claim 1 or 2, wherein, regarding a range of buildup welding of the outer-surface buildup-welded parts, given that an average radius of the tubes is R and a thickness is t, buildup welding is respectively performed in a range at one side from 2.5 times to ten times (Rt)^{1/2} along an axial direction of the tubes around tube welded parts in circumference directions formed by welding of the tubes.

7. The preventive maintenance repairing method for boiler membrane panel welded parts according to claim 1 or 2, wherein, given that a thickness of the tubes is t, the outer-surface buildup-welded parts are buildup-welded to have a thickness from the thickness t of the tubes to twice the thickness.

8. The preventive maintenance repairing method for boiler membrane panel welded parts according to any one of claims 1 to 7, wherein inner surfaces of the tubes are filled with a cooling medium during buildup welding of the outer-surface buildup-welded parts.

9. The preventive maintenance repairing method for boiler membrane panel welded parts according to claim 8, wherein water is used as the cooling medium filling the inner surfaces of the tubes during buildup welding of the outer-surface buildup-welded parts.

10. Boiler equipment on which preventive maintenance repairing of boiler membrane panel welded parts has been performed by the preventive maintenance repairing method for boiler membrane panel welded parts according to any one of claims 1 to 9.
